# EUROPEAN PATENT APPLICATION

(11) **EP 4 712 690 A1**
(43) Date of publication of application: **18.03.2026**
(21) Application number: 23935042.4
(22) Date of filing: 22.11.2023
(51) Int. Cl.: H05B 3/14, H05B 3/40, H05B 3/02, A47J 37/06

(54) **HEATING CORE, HEATING TUBE, AND HOUSEHOLD APPLIANCE**

(30) Priority: 26.04.2023 CN 202310470633
(71) Applicant: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: FANG, Tianzi, Foshan, Guangdong 528311 (CN); RAO, Jie, Foshan, Guangdong 528311 (CN); SUN, Yanjun, Foshan, Guangdong 528311 (CN)
(74) Representative: RGTH
(86) International application number: PCT/CN2023/133207
(87) International publication number: WO 2024/221874

(57) **Abstract**

The present disclosure provides a heating core, a heating tube, and a household appliance. The heating core includes a graphite film material having a heating region. The heating region includes a plurality of heating units connected in series, each of the plurality of heating units including a first section, a second section, a third section, and a fourth section that are connected in sequence. Two adjacent heating units of the plurality of heating units are connected by the first section of one heating unit and the fourth section of the other heating unit. The first section and the third section extend in a first direction, and the second section and the fourth section extend in a second direction. The second direction is an extension direction of the graphite film material and intersects the first direction. A width of the graphite film material is d₀, and widths of the first section, the second section, the third section, and the fourth section are d₁, d₂, d₃, and d₄ respectively, where 2%≤dᵢ/d₀≤20%, i being 1, 2, 3 or 4. By setting dᵢ/d₀≥2%, structural strength of the heating core is improved, and anti-drop performance of the heating core is ensured; and by setting dᵢ/d₀≤20%, a relatively low resistance which would otherwise result in an excessively high power density in the heating region of the graphite film material can be avoided, prolonging a service life of the heating core.

## Description

### CROSS-REFERENCE TO RELATED APPLICATION

This application claims priority to Chinese patent application No. 202310470633.8, titled "HEATING CORE, HEATING TUBE, AND HOUSEHOLD APPLIANCE" and filed with China National Intellectual Property Administration on April 26, 2023, the entire contents of which are incorporated herein by reference.

### FIELD

The present disclosure relates to the field of household appliance technologies, and more particularly, to a heating core, a heating tube, and a household appliance.

### BACKGROUND

Traditional electric ovens mainly heat air inside a cavity through a heating element to heat food, and directly heat a surface of the food by means of thermal radiation. For electrical appliances such as electric ovens, microwave ovens, and steam ovens on the market, the heating element mainly comprises a metal heating tube or a quartz heating tube. However, the existing heating tubes have low heating efficiency, energy cannot be effectively concentrated, a temperature rise rate is slow, and a cooking time is prolonged. It is difficult to achieve a crispy exterior and a tender interior of the food during a baking process, which reducing user experience. In the related art, a graphite heating core has emerged and is intended to solve the above problems, but the current graphite heating core still needs to be improved.

### SUMMARY

The present disclosure aims to solve at least one of the technical problems in the related art. To this end, the present disclosure provides a heating core.

To achieve the above objective, the present disclosure provides a heating core. The heating core comprises a graphite film material having a heating region. The heating region comprises a plurality of heating units connected in series, each of the plurality of heating units comprising a first section, a second section, a third section, and a fourth section that are connected in sequence. Two adjacent heating units of the plurality of heating units are connected by the first section and the fourth section. The first section and the third section extend in a first direction, and the second section and the fourth section extend in a second direction. The second direction is an extension direction of the graphite film material and intersects the first direction. A width of the graphite film material is d₀, and widths of the first section, the second section, the third section, and the fourth section are d₁, d₂, d₃, and d₄ respectively, where 2%≤dᵢ/d₀≤20%, i being 1, 2, 3 or 4.

In some embodiments of the present disclosure, d₀ ranges from 5 mm to 20 mm.

In some embodiments of the present disclosure, dᵢ ranges from 0.1 mm to 4 mm.

In some embodiments of the present disclosure, each of the plurality of heating units has an area of S and power of P. A power density is defined as P_{d}=P/S, where P_{d}≤70W/cm².

In some embodiments of the present disclosure, the first section and the second section are connected by an arcuate transition. The second section and the third section are connected by an arcuate transition. The third section and the fourth section are connected by an arcuate transition. The fourth section and the first section are connected by an arcuate transition.

In some embodiments of the present disclosure, the second direction is perpendicular to the first direction.

In some embodiments of the present disclosure, the graphite film material has a middle region. Two heating regions are provided. The middle region is connected to the two heating regions and located between the two middle regions.

In some embodiments of the present disclosure, the graphite film material further has connection regions located at two ends of the graphite film material, respectively. The connection region is connected to the heating region. The connection region is adapted to be connected to a lead wire.

The present disclosure further provides a heating tube comprising the above-described heating core.

In some embodiments of the present disclosure, the heating tube further comprises an outer tube. The heating core is disposed inside the outer tube. An interior of the outer tube is filled with an inert gas.

The present disclosure further provides a household appliance comprising the above-described heating tube.

In the technical solutions of the present disclosure, when dᵢ/d₀≥2%, manufacturing difficulty of the heating core can be reduced, structural strength of the heating core can be improved, and anti-drop performance of the heating core can be ensured, enabling the heating core to be less prone to breakage or deformation. In addition, when dᵢ/d₀≤20%, a relatively low resistance which would otherwise lead to an excessively high total power can be avoided, preventing an excessively high power density in the heating region of the graphite film material and prolonging the service life of the heating core.

Other advantages of the present disclosure will be provided in part in the following description, or will in part become apparent from the following description, or be learned from practicing of the present disclosure.

### BRIEF DESCRIPTION OF THE DRAWINGS

In order to clearly explain technical solutions according to embodiments of the present disclosure or in the related art, drawings used in the description of the embodiments or the related art are briefly described below. Obviously, the drawings as described below are merely some embodiments of the present disclosure. Based on these drawings, other designs can be obtained by those skilled in the art without creative effort.
FIG. 1 is a schematic view of a heating tube according to some embodiments of the present disclosure.
FIG. 2 is a schematic view of a heating core according to some embodiments of the present disclosure.
FIG. 3 is a schematic view of a heating core according to some embodiments of the present disclosure.

### Description of reference numerals of the accompanying drawings:

heating core 1000, graphite film material 1100, heating region 1110, heating unit A, first section 1111, second section 1112, third section 1113, fourth section 1114, middle region 1120, connection region 1130;
heating tube 2000, connection terminal 2100, lead wire 2200, outer tube 2300.

The realization of objectives, functional features, and advantages of the present disclosure will be further described in conjunction with embodiments and with reference to the accompanying drawings.

### DETAILED DESCRIPTION

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

It should be noted that, each orientation indication (such as up, down, left, right, front, rear, ...) in the embodiments of the present disclosure is used only for explaining a relative positional relation, movements, etc., between components in a particular pose (as illustrated in the figures). If the particular pose is changed, the orientation indication is changed accordingly.

In the present disclosure, unless otherwise clearly specified and limited, terms such as "connect", "fix", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present disclosure can be understood according to specific circumstances.

In addition, description related to "first", "second", and the like in the embodiments of the present disclosure is only used for descriptive purposes, and cannot be understood as indicating or implying relative importance or implicitly indicating the number of indicated technical features. Therefore, the features associated with "first" and "second" may explicitly or implicitly comprise at least one of the features. Further, combinations can be performed on the technical solutions according to various embodiments, but these combinations must be based on the fact that they can be realized by those skilled in the art. When a combination of the technical solutions is contradictory or unattainable, the combination of the technical solutions neither exists nor falls within the protection scope of the appended claims of the present disclosure.

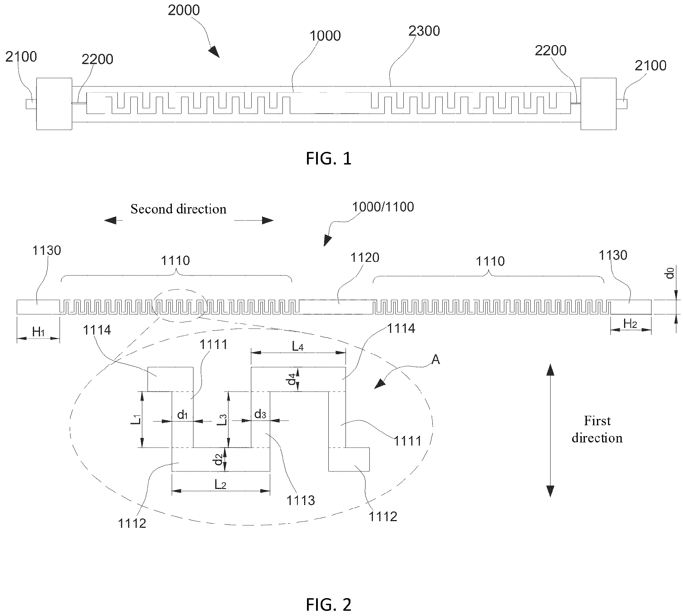

The present disclosure provides a heating core 1000. As illustrated in FIG. 1 and FIG. 2, in some embodiments of the present disclosure, the heating core 1000 comprises a graphite film material 1100. The graphite film material 1100 needs to satisfy a condition of dᵢ/d₀≥2%, in such a manner that manufacturing difficulty of the heating core 1000 can be reduced, structural strength of the heating core 1000 can be improved, and anti-drop performance of the heating core 1000 can be ensured, enabling the heating core 1000 to be less prone to breakage or deformation. In addition, a condition of dᵢ/d₀≤20% also needs to be satisfied, in such a manner that a relatively low resistance which would otherwise lead to an excessively high total power can be avoided, preventing an excessively high power density in a heating region 1110 of the graphite film material 1100 and prolonging the service life of the heating core 1000.

In some embodiments, the graphite film material 1100 is mainly made of graphite and has a flat structure, thus forming surface heating. Compared with traditional heating wires, the graphite film material 1100 has higher heating efficiency, a faster response speed and a quicker heating rate, enabling energy to be more concentrated, and achieving a crispy exterior and a tender interior of the food during baking.

Generally speaking, the heating core 1000 needs to extend for a certain length in a specific direction. As the graphite film material 1100 forms the surface heating, in order to create a larger heating region within a limited length, the graphite film material 1100 has the heating region 1110. The graphite film material 1100 mainly dissipates heat through the heating region 1110. The heating region 1110 comprises a plurality of heating units A, where "a plurality of" means two or more. The plurality of heating units A are connected in series, that is, a current flowing through each of the plurality of heating units A is the same. Each of the plurality of heating units A comprises four sections: a fourth section 1114, a third section 1113, a second section 1112, and a first section 1111. The third section 1113 and the first section 1111 extend for a certain length in a first direction. The fourth section 1114 and the second section 1112 extend for a certain length in a second direction. The first direction intersects the second direction. In this way, the fourth section 1114, the third section 1113, the second section 1112, and the first section 1111 are connected in sequence to form an undulating structure. Since the plurality of heating units A are connected in series, the first section 1111 of one heating unit A is connected to the fourth section 1114 of another heating unit A adjacent to the one heating unit, enabling the heating region 1110 to have a continuous undulating structure. It should be understood that "connect" herein means being joined together. For example, the fourth section 1114, the third section 1113, the second section 1112, and the first section 1111 may be integrally formed, and the plurality of heating units A may also be integrally formed.

The second direction is defined as an extension direction of the graphite film material 1100. Therefore, in the extension direction of the graphite film material 1100, the graphite film material 1100 at least partially has a continuous undulating structure. In the extension direction of the graphite film material 1100, the graphite film material 1100 has sections extending in different directions (the fourth section 1114 and the second section 1112 extend in a same direction, and the third section 1113 and the first section 1111 extend in a same direction). Thus, within a limited space (i.e., an extension length of the graphite film material 1100), the graphite film material 1100 can have a relatively large heating region without reducing the resistance.

As described above, in the extension direction of the graphite film material 1100, the heating region 1110 may have the continuous undulating structure. If a dimension of the heating region 1110 is unreasonably designed, the heating region 1110 of the graphite film material 1100 is easily broken during a drop test of the heating core 1000, which affects use of the heating core 1000. For example, the heating core 1000 and other components are assembled to form a heating tube 2000 (described in detail below), and the heating tube 2000 is horizontally dropped from a height of 25 cm onto a rubber plate having a thickness of 10 mm for testing. During the drop test, vibration is transmitted to the heating core 1000. Since the heating core 1000 extends for a certain length in the second direction, the heating core 1000 may swing in the second direction. Since the fourth section 1114 and the second section 1112 extend in the second direction, stress may be mainly concentrated on the fourth section 1114 and the second section 1112, especially at an intersection of the fourth section 1114 and the third section 1113, an intersection of the fourth section 1114 and the first section 1111, an intersection of the second section 1112 and the first section 1111, and an intersection of the second section 1112 and the third section 1113, which are likely to cause breakage. Therefore, in this embodiment, to enhance shock resistance of the heating core 1000 and reduce a breakage risk of the heating core 1000, a width of the fourth section 1114 is designed to be at least 2% of a width of the graphite film material 1100. For example, the width of the graphite film material 1100 is defined as d₀ and the width of the fourth section 1114 is defined as dᵢ (i=4), where d₄/d₀≥2%. Correspondingly, a width of the third section 1113 is dᵢ (i=3), where d₃/d₀≥2%. A width of the second section 1112 is dᵢ (i=2), where d₂/d₀≥2%. A width of the first section 1111 is dᵢ (i=1), where d₁/d₀≥2%. Four sections are all required to satisfy a requirement of dᵢ/d₀≥2%. Through such an arrangement, the shock resistance of the heating core 1000 can be enhanced, endowing the heating core 1000 with sufficient strength to avoid breakage of the heating region 1110 caused by stress concentration. Also, the width dᵢ is designed to be at least 2% of the width of the graphite film material 1100, which can prevent the widths of the fourth section 1114, the third section 1113, the second section 1112, and the first section 1111 from being excessively small, thus reducing manufacturing difficulty.

It should be understood that, the so-called width is relative to a length. As illustrated in FIG. 2, the width is smaller than the length. d₄, d₃, d₂, and d₁ respectively refer to the widths of the fourth section 1114, the third section 1113, the second section 1112, and the first section 1111. A width direction of each of the fourth section 1114, the third section 1113, the second section 1112, and the first section 1111 is substantially perpendicular to a current flow direction. L₄, L₃, L₂, and L₁ respectively refer to lengths of the fourth section 1114, the third section 1113, the second section 1112, and the first section 1111. A length direction of each of the fourth section 1114, the third section 1113, the second section 1112, and the first section 1111 is substantially the same as the current flow direction. d₀ refers to the width of the graphite film material 1100, and a width direction of the graphite film material 1100 is the first direction.

In addition, the width dᵢ needs to be designed to be not greater than 20% of the width of the graphite film material 1100, that is, the width of the fourth section 1114 is dᵢ (i=4), where d₄/d₀≤20%. Correspondingly, the width of the third section 1113 is dᵢ (i=3), where d₃/d₀≤20%. The width of the second section 1112 is dᵢ (i=2), where d₂/d₀≤20%. The width of the first section 1111 is dᵢ (i=1), where d₁/d₀≤20%. In this way, reduction in the resistance caused by an excessively large current flow area is avoided, thus preventing the service life of the graphite film material 1100 from being affected by an excessively high total power of the heating core 1000. As can be seen from the above, by optimizing the widths and the lengths of the four sections of the heating unit A (the fourth section 1114, the third section 1113, the second section 1112, and the first section 1111), heating efficiency and the structural strength of the heating core 1000 can be balanced.

As can be seen from the above, in the technical solutions of the present disclosure, when dᵢ/d₀≥2%, the manufacturing difficulty of the heating core 1000 can be reduced, the structural strength of the heating core 1000 can be improved, and the anti-drop performance of the heating core 1000 can be ensured, enabling the heating core 1000 to be less prone to the breakage or the deformation. In addition, when dᵢ/d₀≤20%, the relatively low resistance which would otherwise lead to the excessively high total power can be avoided, preventing the excessively high power density in the heating region 1110 of the graphite film material 1100 and prolonging the service life of the heating core 1000.

In some embodiments of the present disclosure, the width d₀ of the graphite film material 1100 ranges from 5 mm to 20 mm. The width d₀ of the graphite film material 1100 may be 5 mm, 7 mm, 9 mm, 11 mm, 13 mm, 15 mm, 17 mm, 19 mm, or 20 mm. In this way, the graphite film material 1100 has an appropriate width, and will not be too wide to affect strength, nor too narrow to make it difficult to process the above-described plurality of heating units A. It should be understood that the heating core 1000 needs to be mounted in an outer tube 2300 to form the heating tube 2000. Therefore, by designing the width d₀ of the graphite film material 1100 within a reasonable range, a radial dimension of the outer tube 2300 is prevented from being excessively large and occupying a space of a corresponding equipment.

In some embodiments of the present disclosure, dᵢ is designed to be ranged from 0.1 mm to 4 mm. dᵢ may be 0.1 mm, 0.3 mm, 0.6 mm, 1.9 mm, 2.4 mm, 2.8 mm, 3.2 mm, 3.5 mm, 3.8 mm, or 4 mm. By designing dᵢ within a reasonable range, the heating unit A can be easily processed. Also, an excessively large current-flowing cross-sectional area of the fourth section 1114, the third section 1113, the second section 1112, and the first section 1111, which would otherwise reduce the resistance, can be avoided, preventing the total power of the heating core 1000 from being excessively high and affecting the service life, or even affecting the service life of the outer tube 2300.

In some embodiments of the present disclosure, as illustrated in FIG. 2, an area of the heating unit A is S. For example, the area S of the heating unit A can be calculated by calculating areas of the fourth section 1114, the third section 1113, the second section 1112, and the first section 1111 respectively, where S= d₁*L₁+d₂*L₂+d₃*L₃+d₄*L. Power of the heating unit A is P. A power density of the heating unit A is P_{d}, where P_{d}=P/S, and P_{d}≤70W/cm². Through extensive tests by the inventor, it has been found that at a rated voltage, such as 110 V or 220 V, the power density of not more than 70 W/cm² can take into account a baking effect of food ingredients and ensure the service life of the heating core 1000, preventing the heating core 1000 from being damaged due to excessive wear. It should be understood that the power density P_{d} can be calculated based on a total power Pₜₒₜₐₗ of the heating core 1000, for example, if there are n heating units A, then Pₜₒₜₐₗ = nP.

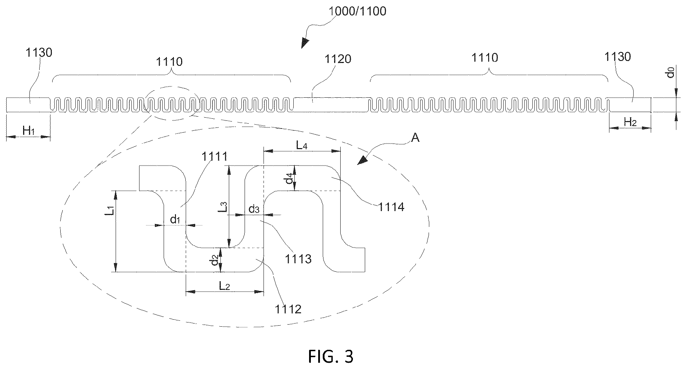

As illustrated in FIG. 3, in some embodiments of the present disclosure, to further improve shock resistance of the graphite film material 1100, an arcuate transition is formed at each of the intersection of the fourth section 1114 and the third section 1113, the intersection of the third section 113 and the second section 1112, the intersection of the second section 112 and the first section 1111, and the intersection of the fourth section of one heating unit A and the first section of another heating unit A adjacent to the one heating unit. In this way, the stress concentration can be reduced.

As described above, since the heating core 1000 extends for the certain length in the second direction, the heating core 1000 may swing in the second direction, resulting in the stress being mainly concentrated at the fourth section 1114 and the second section 1112, especially at the intersection of the fourth section 1114 and the third section 1113, the intersection of the fourth section 1114 and the first section 1111, the intersection of the second section 1112 and the first section 1111, and the intersection of the second section 1112 and the third section 1113. By designing the arc transitions at the intersections of the sections of the heating unit A (the fourth section 1114, the third section 1113, the second section 1112, and the first section 1111), the stress is dispersed, the breakage at the intersection is avoided, the shock resistance is improved, and the service life is further prolonged.

As illustrated in FIG. 2, in some embodiments of the present disclosure, the first direction is perpendicular to the second direction. That is, the fourth section 1114 and the second section 1112 extend substantially in the extension direction of the graphite film material 1100, while the third section 1113 and the first section 1111 extend in a direction substantially perpendicular to the second direction. In this way, structural processing of the fourth section 1114, the third section 1113, the second section 1112, and the first section 1111 of the heating unit A is facilitated, an overall structure is more stable, and a space can be maximally utilized.

As illustrated in FIG. 2, in some embodiments of the present disclosure, two heating regions 1110 are provided and defined as a first heating region 1110 and a second heating region 1110. In FIG. 2, the heating region 1110 located at a left side is the first heating region 1110, and the heating region 1110 located at a right side is the second heating region 1110. The graphite film material 1100 further comprises a middle region 1120, which is located between the first heating region 1110 and the second heating region 1110. The middle region 1120 is connected to the first heating region 1110 and the second heating region 1110. The first heating region 1110 is electrically connected to the second heating region 1110 through the middle region 1120 to transmit a current. The middle region 1120 is arranged to separate the first heating region 1110 from the second heating region 1110, preventing excessive heat concentration. When the heating core 1000 radiates heat into a cavity, a temperature of an inner cavity near a middle of the heating core 1000 is relatively high. Thus, by designing the middle region 1120 to separate the first heating region 1110 from the second heating region 1110, the heat radiated by the heating core 1000 is more uniformly distributed. In addition, by providing the middle region 1120, a length of the middle region 1120 can be adjusted based on different scenarios, allowing lengths of the first heating region 1110 and the second heating region 1110 to adapt to changes, achieving dynamic distribution of power changes.

As illustrated in FIG. 2, in some embodiments of the present disclosure, the graphite film material 1100 further comprises a connection region 1130 located at an end of the graphite film material 1100. The heating core 1000 can be electrically connected to external components through the connection region 1130. For example, the connection region 1130 provides a support point to fix a lead wire 2200. The lead wire 2200 can be fixed at the connection region 1130, while the other end of the lead wire 2200 can be connected to other components (e.g., a connection terminal 2100). The connection region 1130 located at an end of the graphite film material 1100 is defined as a first connection region 1130, and the connection region 1130 located at the other end of the graphite film material 1100 is defined as a second connection region 1130. As illustrated in FIG. 2, the connection region 1130 located at the left side is the first connection region 1130, and the connection region 1130 located at the right side is the second connection region 1130. The first connection region 1130 abuts the first heating region 1110, and the second connection region 1130 abuts the second heating region 1110. The arrangement of the connection region 1130 facilitates the energization of the heating core 1000.

In some embodiments, the graphite film material 1100 mainly dissipates heat through the heating region 1110, and the heating region 1110 comprises the plurality of heating units A. A total resistance of the heating region 1110 may be calculated by summing resistances of the individual heating units A. In some embodiments, a resistance of the fourth section 1114 is R₄, where R₄=ρL₄/(σd₄); a resistance of the third section 1113 is R₃, where R₃=ρL₃/(σd₃); a resistance of the second section 1112 is R₂, where R₂=ρL₂/(σd₂); a resistance of the first section 1111 is R₁, where R₁=ρL₁/(σd₁); a resistance of the heating unit A is R, where R= R₄+ R₃+ R₂+ R₁; and a total resistance of the graphite film material 1100 is Rₜₒₜₐₗ, where Rₜₒₜₐₗ=nR.

ρ represents a resistivity, and σ represents a thickness of the graphite film material 1100. It should be understood that, in the present disclosure, the number n of the heating unit A is not limited, and those skilled in the art may design the number n based on actual requirements to meet heating requirements.

For example, the graphite film material 1100 has a length of 240 mm, a width (d₀) of 8 mm, a thickness (σ) of 0.2 mm, and the resistivity (ρ) of 0.00029Ω·cm; d₁, d₂, d₃, and d₄ are each 1.6 mm; L₁ and L₃ are each 6.8 mm; L₂ and L₄ are each 3.8 mm; and H₁ and H₂ are each 16.5 mm, where H₁ and H₂ are lengths of the first connection region 1130 and the second connection region 1130 respectively. A resistance value is designed to be 9 Ω. The resistance of the heating unit A may be split into R₁, R₂, R₃, and R₄, which are calculated to be 0.061625 for R₁ and R₃, and 0.034438 for R₂ and R₄. The resistance R of the heating unit A is 0.192125, and the number n of the heating units A is designed to be 47, resulting in the total resistance Rₜₒₜₐₗ of 9.029875 Ω.

In a second aspect of the present disclosure, a heating tube 2000 is further provided. The heating tube 2000 comprises the heating core 1000 of the above-described embodiments. It should be understood that, the heating core 1000 of the heating tube 2000 of this embodiment adopts the technical solutions of the above-described embodiments, and thus has at least the beneficial effects brought by the technical solutions of the above-described embodiments, comprising but not limited to reducing the manufacturing difficulty of the heating core 1000, improving the structural strength of the heating core 1000, ensuring the anti-drop performance of the heating core 1000, enabling the heating core 1000 to be less prone to the breakage or the deformation, and preventing the relatively low resistance which would otherwise lead to an excessively high total power. In this way, the excessively high power density in the heating region 1110 of the graphite film material 1100 is prevented, and the service life of the heating core 1000 is prolonged.

In some embodiments, the heating tube 2000 comprises the above-described heating core 1000, the outer tube 2300, the lead wire 2200, and the connection terminal 2100. The outer tube 2300 may be a glass tube. The heating core 1000 is inserted into the outer tube 2300. Two ends of the graphite film material 1100 of the heating core 1000 are respectively connected to the lead wires 2200. The outer tube 2300 is provided with the connection terminal 2100 at each of the two ends of the outer tube 2300. The lead wire 2200 is connected to the connection terminal 2100, and the connection terminal 2100 is adapted to be connected to other power supply components. Optionally, the interior of the outer tube 2300 is filled with an inert gas. The inert gas may be helium (He), neon (Ne), argon (Ar), krypton (Kr), xenon (Xe), etc. When the heating core 1000 is energized, the graphite film material 1100 is in a high-temperature heating state. The provision of the inert gas can protect the graphite film material 1100 and prolong the service life of the graphite film material 1100.

In a third aspect of the present disclosure, a household appliance is further provided. The household appliance comprises the heating tube 2000 of the above-described embodiments. The household appliance may be an equipment requiring heating, such as an electric oven, a microwave oven, or a steam oven. It should be understood that the heating tube 2000 of the household appliance in this embodiment adopts the heating tube 2000 of the above-described embodiments, and thus has at least the beneficial effects brought by the technical solutions of the above-described embodiments, which will not be repeated here.

Although preferred embodiments of the present disclosure are described above, the scope of the present disclosure is not limited to the embodiments. Any equivalent structure transformation made within the concept of the present disclosure using the contents of the specification and the accompanying drawings of the present disclosure, or any direct or indirect application of the contents of the specification and the accompanying drawings of the present disclosure in other related fields, shall fall within the scope of the present disclosure.

## Claims

1. A heating core, comprising:
a graphite film material having a heating region, wherein the heating region comprises a plurality of heating units connected in series, each of the plurality of heating units comprising a first section, a second section, a third section, and a fourth section that are connected in sequence, and wherein:
two adjacent heating units of the plurality of heating units are connected by the first section and the fourth section;
the first section and the third section extend in a first direction, and the second section and the fourth section extend in a second direction;
the second direction is an extension direction of the graphite film material and intersects the first direction; and
a width of the graphite film material is d₀, and widths of the first section, the second section, the third section, and the fourth section are d₁, d₂, d₃, and d₄ respectively, where 2%≤dᵢ/d₀≤20%, i being 1, 2, 3 or 4.

2. The heating core according to claim 1, wherein d₀ ranges from 5 mm to 20 mm.

3. The heating core according to claim 1, wherein dᵢ ranges from 0.1 mm to 4 mm.

4. The heating core according to claim 1, wherein each of the plurality of heating units has an area of S and power of P, and wherein a power density is defined as P_{d}=P/S, where P_{d}≤70W/cm².

5. The heating core according to any one of claims 1 to 4, wherein:
the first section and the second section are connected by an arcuate transition;
the second section and the third section are connected by an arcuate transition;
the third section and the fourth section are connected by an arcuate transition; and
the fourth section and the first section are connected by an arcuate transition.

6. The heating core according to claim 1, wherein the second direction is perpendicular to the first direction.

7. The heating core according to claim 1, wherein:
the graphite film material has a middle region;
two heating regions are provided; and
the middle region is connected to the two heating regions and located between the two middle regions.

8. The heating core according to claim 1 or 7, wherein:
the graphite film material further has connection regions located at two ends of the graphite film material, respectively;
the connection region is connected to the heating region; and
the connection region is adapted to be connected to a lead wire.

9. A heating tube, comprising a heating core according to any one of claims 1 to 8.

10. The heating tube according to claim 9, further comprising an outer tube, wherein:
the heating core is disposed inside the outer tube; and
an interior of the outer tube is filled with an inert gas.

11. A household appliance, comprising an heating tube according to claim 9 or 10.
